# EUROPÄISCHE PATENTSCHRIFT

(11) **EP 2 199 719 B1**
(45) Veröffentlichungstag und Bekanntmachung des Hinweises auf die Patenterteilung: **22.10.2014**
(21) Anmeldenummer: 09015473.3
(22) Anmeldetag: 15.12.2009
(51) Int. Cl.: C21C 5/44, F27D 1/16, B25J 5/00, B25J 9/00, F27D 21/00

(54) **Anlage zum Auskleiden einer inneren Wand einer Umhüllung, insbesondere eines Konverters, mit einem Mauerwerk aus Steinen**
Assembly for cladding an internal wall of a casing, particularly of a converter, with stone masonry
Installation destinée à recouvrir une paroi interne d'une enveloppe, notamment un convertisseur, dotée d'un mur en pierre

(30) Priorität: 16.12.2008 DE 102008062509
(43) Veröffentlichungstag der Anmeldung: 23.06.2010
(73) Patentinhaber: SMS Siemag Aktiengesellschaft, 40237 Düsseldorf (DE)
(72) Erfinder: Schöck, Hans-Wilhelm, 47239 Duisburg (DE); Meier, Lars, 47239 Duisburg (DE)
(74) Vertreter: Klüppel, Walter

(56) Entgegenhaltungen:
- EP-A1- 0 477 661
- DE-A1- 2 922 838
- DE-A1- 4 321 299
- US-A1- 2002 158 368

## Beschreibung

Die Erfindung bezieht sich auf eine roboterunterstützte Anlage zum Auskleiden einer Wand einer Umhüllung, insbesondere eines Konverters, mit einem, insbesondere feuerfesten, Mauerwerk, umfassend: wenigstens einen ersten mit einer Steuerung ausgestatteten Roboter zum Verlegen von Steinen, der auf einer wenigstens vertikal verschiebbaren Plattform installiert ist, ein Depalettiermodul zum Auspacken und Vorbereiten von Steinen entsprechend den Erfordernissen des Roboters, einen Aufzug zum Befördern der von dem Depalletiermodul aufgenommenen Steine und eine Messvorrichtung zum Ausmessen des Konverters.

Eine derartige Anlage umfasst einen Roboter zum Verlegen der Steine, der auf einer vertikal verschiebbaren Arbeitsplattform angebracht ist, so dass er in verschiedenen Segmenten der Umhüllung arbeiten kann. Ein Depalletiermodul ist so ausgelegt, dass er aus Paletten mit verschiedenen Steintypen die Steine entsprechend den Erfordernissen des Steinverlegeroboters zusammenstellt. Ein Aufzugmodul ist so ausgelegt, dass er die von dem Depalettiermodul zusammengestellten Stapel auf einer Ladeplattform aufnehmen und nach oben bis zu der Arbeitsplattform befördern kann. Ein Versorgungsmodul für die Arbeitsplattform übernimmt die Stapel von dem Aufzugsmodul und befördert die Steine entsprechend den Erfordernissen des Steinverlegeroboters nacheinander weiter. Die Steine werden einzeln von den Paletten abgenommen und in den Kettenförderer gelegt. Mit diesem werden sie auf die Arbeitsplattform des Mauerungsroboters gebracht.

Aus der DE 43 21 299 A1 ist eine gattungsgemäße Anlage zum Auskleiden einer inneren Wand einer Umhüllung mit einem Mauerwerk aus, insbesondere feuerfesten, Steinen bekannt, die durch einen auf der Arbeitsplattform angebrachten Zentriermodul gekennzeichnet ist, der eine Vorrichtung zur aufeinanderfolgenden Verschiebung der Steine aufweist, die im Bereich der Arbeitsplattform den Versorgungsmodul mit einer Übernahmezone verbindet, die am Rand der Arbeitsplattform liegt, in dem der Roboter gerade arbeitet. Es ist mindestens eine Zentralposition vorhanden, die in dieser Übernahmezone eingerichtet ist, und bei der der Roboter die Steine holt. Mindestens eine Zentriervorrichtung ist so angeordnet, dass die Steine in dieser bzw. in diesen Zentrierpositionen zentriert werden. Diese Anlage umfasst einen Aufzugsmodul, mit dem in einer Aufwärts- und Abwärtsbewegung Steine zur Arbeitsplattform transportiert werden können.

Die DE 29 22 838 A1 beschreibt ein hochfahrbares Arbeitsgerüst zum Durchführen von Reparatur-oder Erneuerungsarbeiten an der Auskleidung eines Konverters, wobei zum Transport von Material auf die Arbeitsbühne ein kontinuierlicher Kettenförderer mit Kettenspeicher verwendet wird.

Es ist die Aufgabe der Erfindung, die Anlage zur Handhabung der Steine beim Auskleiden einer Umhüllung mit einem Mauerwerk aus Steinen zu optimieren.

Bei einer Anlage der eingangs genannten Art wird diese Aufgabe dadurch gelöst, dass die Messvorrichtung ein Lasermessgerät umfasst. Durch den Einsatz eines Lasermessgeräts lässt sich eine sehr hohe Genauigkeit beim Ermitteln der Maße der Wandung der Umhüllung sowie beim Verlegen der Mauersteine erreichen. Des Weiteren umfasst der Aufzug der Anlage wenigstens einen Kettenförderer der ein Antriebssystem und wenigstens eine Förderkette aufweist, wobei der Kettenförderer auf dem Wagenrahmen als auch auf der Arbeitsplattform fest integrierte Kettenräder aufweist, wobei zwischen den Kettenrädern ein Leertrum in der Weise gebildet ist, dass Längendifferenzen zwischen verschiedenen Hubhöhen der Arbeitsplattform durch eine scherenförmige Parallelogrammführung ausgleichbar sind.

Derart auf dem Markt befindliche Lasermessgeräte arbeiten beispielsweise im infraroten Bereich; hierbei lässt sich einen Genauigkeit von etwa 5 mm erzielen. Bei höherfrequentem Licht lässt sich die Genauigkeit noch weiter erhöhen. Die durch die Lasermessung bestimmten Konturen der Wandung werden an den Roboter weitergeleitet. Die Robotersteuerung ermittelt daraus für jede Steinlage den optimalen Radius und die optimalen Kantenlängen der zu verlegenden Steine. Jeder Stein in der Ausmauerung erhält somit seine eigene Koordinate. Dadurch ist es möglich, die Lage der von Form und Material unterschiedlichen Steine wie z. B. in der Schlackenzone oder der Aufprallzone des Schrotts, genau zu definieren.

Ebenso lassen sich auch Deformationen an der Gefäßgeometrie des Konverters bestimmen, die sich nach längerer Betriebszeit ergeben können.

Vorteilhafte Weiterbildungen der Erfindung ergeben sich aus den Unteransprüchen.

Bevorzugt wird die Anlage auf einem auf Schienen verfahrbaren Wagen mit einem Wagenrahmen integriert, um sie bei Bedarf an den Konverter heranfahren zu können, damit die Ausmauerungsvorrichtung durch eine untere Öffnung des Konverters hindurch mittels des Aufzugs oder einer anderen Hubvorrichtung in das Innere des Konverters hinein eingebracht werden kann. Dabei lassen sich dieselben Schienen nutzen, wie sie sonst für den Transport des Stahls eingesetzt werden. Im Bedarfsfall kann die Anlage somit mittels eines Krans auf die Schienen gesetzt werden und mit einem Stahlentnahmewagen in die Position unterhalb des Konverters gefahren werden.

Vorzugsweise umfasst die Anlage als Aufzug ein verfahrbares Rahmengestell mit hydraulisch betriebenen Teleskopzylindern.

Vorzugsweise sind an der Peripherie des Rahmengestells Konsolen angebracht sind, die der Aufnahme eines zweiten Roboters, einer Ladestation für die zu verlegenden Steine, eines Hydraulikaggregats, einer Robotersteuerung und/oder einer elektrischen Steuer- und/oder Antriebseinheit dienen. Dabei dient der zweite Roboter vorzugsweise zum Zuführen der insbesondere auf einer Palette geladenen Steine.

Es lässt sich mit Vorteil vorsehen, dass der Aufzug eine weitere Lasthebeeinrichtung, insbesondere eine Hubwinde, umfasst. Der zweite Roboter dient somit als Zuführroboter, der die in logistischer Reihenfolge auf die Paletten geladenen Steine aufnimmt und sie in den umlaufenden Kettenförderer legt, der die Mauersteine auf die Arbeitsplattform des ersten, auch als Mauerungsroboters bezeichneten Roboters legt.

Der Kettenförderer besteht aus einer oder mehreren Ketten mit einem Antriebssystem, das vorzugsweise auf der Plattform des wenigstens einen Roboters angebracht ist.

Der Kettenförderer weist sowohl auf dem Wagenrahmen als auch auf der Arbeitsplattform fest integrierte Kettenräder auf.

Zwischen den Kettenrädern wird ein Leertrum in der Weise gebildet, dass sich Längendifferenzen zwischen verschiedenen Hubhöhen der Arbeitsplattform durch eine scherenförmige Parallelogrammführung ausgleichen lassen. Der Kettenförderer umfasst in bestimmten Abständen angeordnete Lastaufnahmemittel, deren Abstand ebenso wie die Fördergeschwindigkeit des Kettenförderers auf den Arbeitszyklus des Mauerungsroboters abgestimmt sind.

In einer weiteren vorteilhaften Ausgestaltung der Erfindung ist vorgesehen, dass auf der Plattform eine Mörtelmischeinrichtung installiert ist, durch die sich vor Ort Mörtelmasse zum Verfüllen der Freiräume zwischen den Mauersteinen und dem Gefäß bzw. dem Dauerfutter durch den wenigstens einen ersten Roboter erzeugen lässt. Es kann aber auch eine Verfüllung mit feuerfestem Sand erfolgen. Vorzugsweise ist auf der Plattform ein Wassertank integriert.

Ebenso wird mit Vorteil wenigstens eine Überwachungskamera, insbesondere eine 3D-Kamera, zur Überwachung des Füllens der Freiräume zwischen den Mauersteinen und dem Gefäß bzw. dem Dauerfutter eingesetzt.

Nachstehend wird die Erfindung in einem Ausführungsbeispiel näher erläutert. Es zeigen:
- Fig. 1: einen Längsschnitt durch einen auf seiner Unterseite eine Öffnung aufweisenden Konverter zusammen mit einer unterhalb des Konverters positionierten Anlage zum Auskleiden der Innenwand des Konverters,
- Fig. 2: die Schnittansicht gemäß Fig. 1, wobei die Anlage teilweise in das Innere des Konverters hineingefahren ist,
- Fig. 3: einen weiteren Längsschnitt, im rechten Winkel zu der Ebene des Längsschnitts gemäß Fig. 1, 2, wobei sich die Anlage in der obersten Arbeitsposition befindet, und
- Fig. 4: eine Draufsicht auf den Konverter mit der in ihn eingebrachten Anlage zum Auskleiden der Innenwand, wobei die obere Öffnung des Konverters entfernt ist.

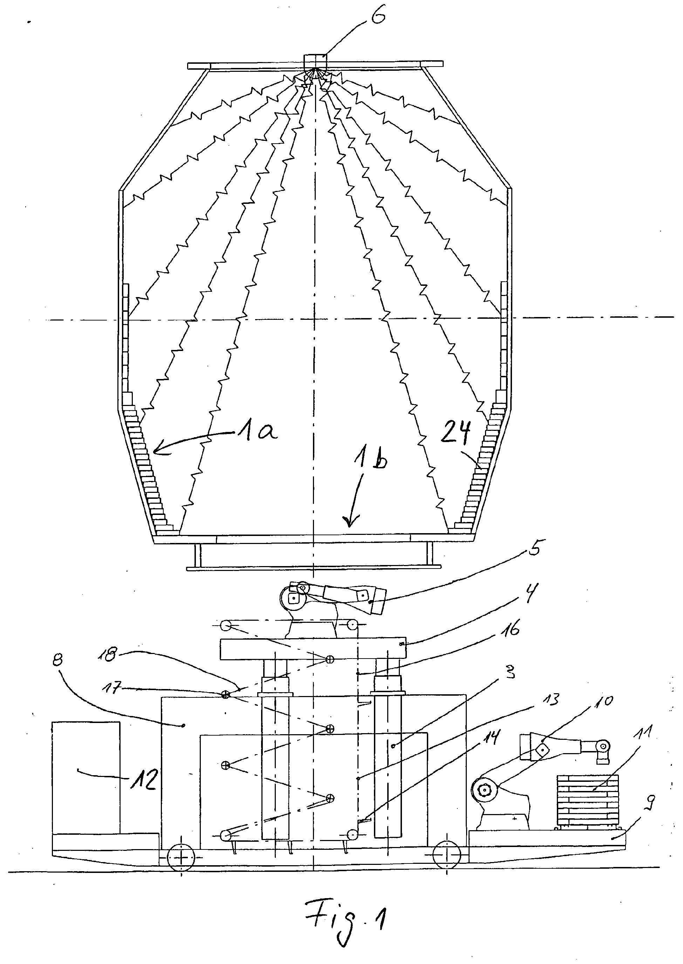

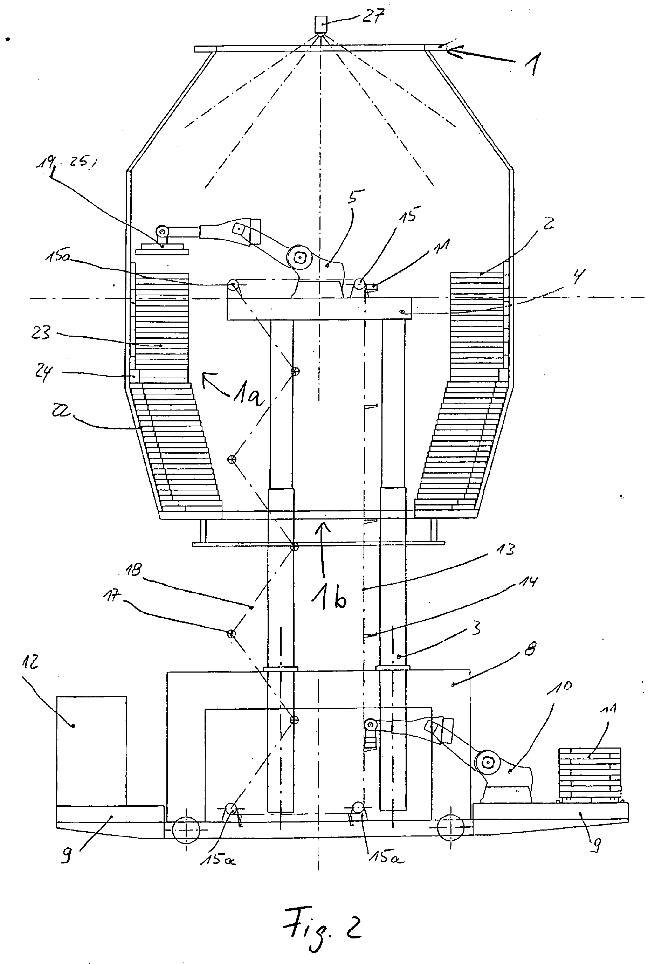

Ein Konverter (Fig. 1) zur Stahlerzeugung weist eine Wandung 1 a aus Feuerfestmaterial 2 auf. Auf seiner Unterseite hat der Konverter 1 eine Öffnung 1b, durch die eine Anlage mittels einer Hubvorrichtung 3, einer Arbeitsplattform 4 und einem auf der Arbeitsplattform 4 aufgebrachten Mauerungsroboter 5 in das Innere des Konverters 1 hineinfahrbar ist, um dort Steinlagen eines Verschleißfutters 23 (Fig. 2) auf der Innenseite eines Dauerfutters 24 aufzubringen. Hierzu wird der Innenraum des Konverters 1 zunächst mittels eines Messgeräts 6 vermessen, das auf der Plattform 4, aber auch, wie dargestellt, unter der Decke des Konverters 1 installiert sein kann.

Mittels eines Laserstrahls wird die gesamte innere Wandung des Konverters 1 abgetastet. Dabei werden sämtliche Konturen der des Dauerfutters 24 erfasst, um aufgrund eines Vergleichs mit Solldaten der Innenseite des Dauerfutters 24 die Abmessungen jedes einzelnen zu verlegenden Steins zu bestimmen. Im infraroten Bereich wird eine Genauigkeit von etwa 5 mm erreicht. Gemäß der Erfindung kann jedoch mit Licht höherer Frequenz eine Genauigkeit von 0,1 mm erreicht werden.

Die gemessene Kontur wird an eine Robotersteuerung 7 weitergeleitet, die für jeden Stein oder wenigstens für jede Steinlage den optimalen Radius ermittelt. Jeder Stein des Verschleißfutters 23 erhält somit seine eigenen Koordinaten, die an den Mauerungsroboter 5 weitergeleitet werden. Mittels der Lasermessung lassen sich auch Deformationen erfassen, wie sie sich im Laufe einer längeren Betriebsdauer ergeben können. Diese Daten lassen sich sowohl an dem Dauerfutter 24 als auch an dem Verschleißfutter 23 gewinnen und als Basis für die neue Aufmauerung verwenden.

Die Ausmauerungsvorrichtung für den Einsatz eines Industrieroboters besteht vorteilhafterweise aus einem verfahrbaren Rahmengestell 8, das mittels der verfahrbare hydraulische Teleskopzylinder aufweisenden Hubvorrichtung 3 in die gewünschte Position innerhalb des Inneren des Konverters 1 gefahren wird.

Die gesamte Anlage der Ausmauerungsvorrichtung ist vorzugsweise als Schienenfahrzeug konzipiert, das die gleiche Spurweite wie ein Stahlentnahmewagen aufweist. Im Bedarfsfall lässt sich die Anlage mittels eines Krans auf die Schienen aufsetzen und/oder mit Hilfe eines Stahlentnahmewagens in die Position unterhalb des Konverters 1 verfahren.

An der Peripherie des Rahmengestells 8 sind Konsolen 9 angebracht, die die Aufnahme eines zweiten Roboters 10, einer Ladestation für eine Palette 11 der Mauerungssteine, eines Hydraulikaggregats 12 sowie der Robotersteuerung 7 und einer elektrischen Steuerung oder Antriebseinheit 7a gestatten.

Der Roboter 10 dient als Zuführroboter und nimmt in der von der Logistik vorgegebenen Reihenfolge die auf die Paletten geladenen Steine auf und legt sie in einen umlaufenden Kettenförderer 13, der eine Mehrzahl von Ladestationen oder Lastaufnahmemitteln 14 besitzt. Der Kettenförderer 13 transportiert die Steine auf die Arbeitsplattform 4 des Mauerungsroboters 5.

Der Kettenförderer 13 umfasst eine einzige oder eine Mehrzahl von Ketten und ein Antriebssystem 15, das beispielsweise auf der Arbeitsplattform 4 angebracht ist. Die Teilung der Lastaufnahmemittel 14 des Kettenförderers 13 und die Fördergeschwindigkeit sind auf den Arbeitszyklus des Mauerungsroboters 5 abgestimmt.

Durch die unterschiedlichen Höhen, die die Arbeitsplattform 4 und der Mauerungsroboter 5 während der Zustellung einnehmen können, wird das Kettenfördersystem 13 derart ausgelegt, dass sowohl auf dem Rahmengestell 8 als auch auf der Arbeitsplattform 4 fest installierte Kettenräder 15a vorgesehen sind. Das Leertrum 16a des Kettenförderers ist mit Kettenrädern 17 über ein Gelenksystem 18 derart ausgelegt, dass die Längendifferenzen zwischen verschiedenen Höhen, die die Arbeitsplattform 4 einnehmen kann, etwa scherenförmig ausgeglichen werden.

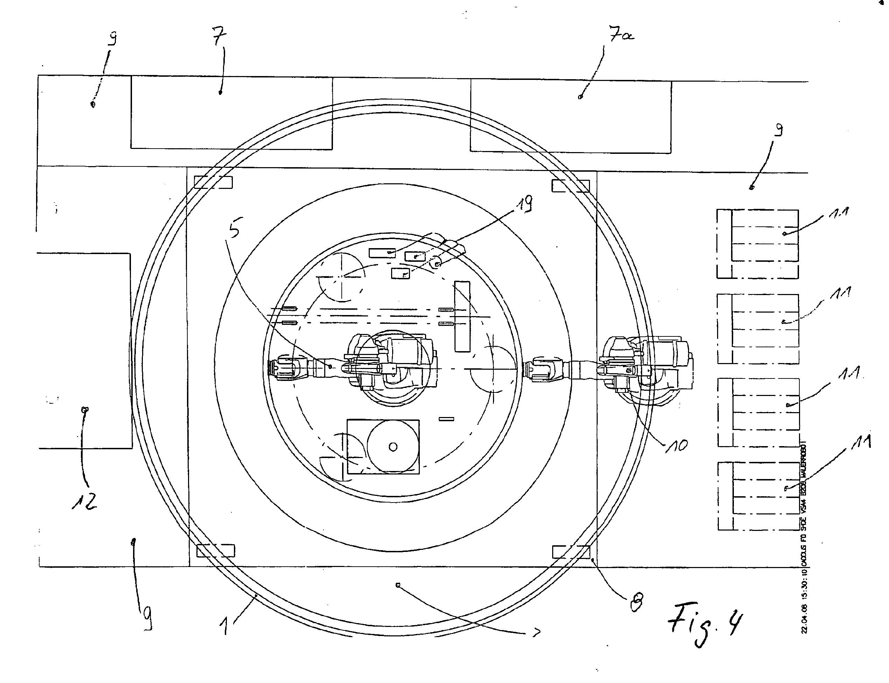

Sowohl der Zuführroboter 10 als auch der Mauerungsroboter 5 werden mit einem oder mehreren Werkzeugen 19 (Fig. 4) ausgestattet, etwa in Form von Saughebern, die mittels eines Werkzeugwechselsystems mit den Robotern 5, 10 verbunden sind.

Durch die sich durch die Gefäßgeometrie ergebenden optimalen Radien für die Anordnung der Steine kann es möglich sein, dass der Abschlussstein im Rahmen einer Steinlage speziell zugeschnitten werden muss. Für diesen Fall ist der Mauerungsroboter 5 mit einem Lasermessgerät 20 ausgerüstet, mit dem die Kontur des Abschlusssteins bestimmt und an die Bodenstation weitergeleitet wird. Dort wird der Abschlussstein zugeschnitten und beispielsweise über eine zweite Lasthebevorrichtung 21, z. B. einen weiteren Kettenförderer oder eine Hubwinde, in den Arbeitsbereich des Mauerungsroboters 5 befördert.

Wenn sich die Notwendigkeit ergibt, einen möglichen Freiraum 22 zwischen einem Mauerstein 23 und der Konverterwand oder dem Dauerfutter 24 mit einer Mörtelmasse aufzufüllen, wird dem dadurch Rechnung getragen, dass die Arbeitsplattform 4 des Mauerungsroboters 5 einen Wassertank aufnimmt. Durch ein auf der Plattform 4 installiertes Werkzeugwechselsystem 25 ist gewährleistet, dass der Mauerungsroboter 5 eine Spritzdüse 26 aufnehmen kann, über die sich Mörtelmasse in Hohlräume der Wandung des Konverters 1 spritzen lässt. Diese kommt zum Einsatz, wenn Freiräume innerhalb des ausgemauerten Bereichs aufgefüllt werden müssen. Der zu füllende Freiraum wird durch eine ebenfalls auf dem Mauerungsroboter installierte 3D-Kamera ermittelt.

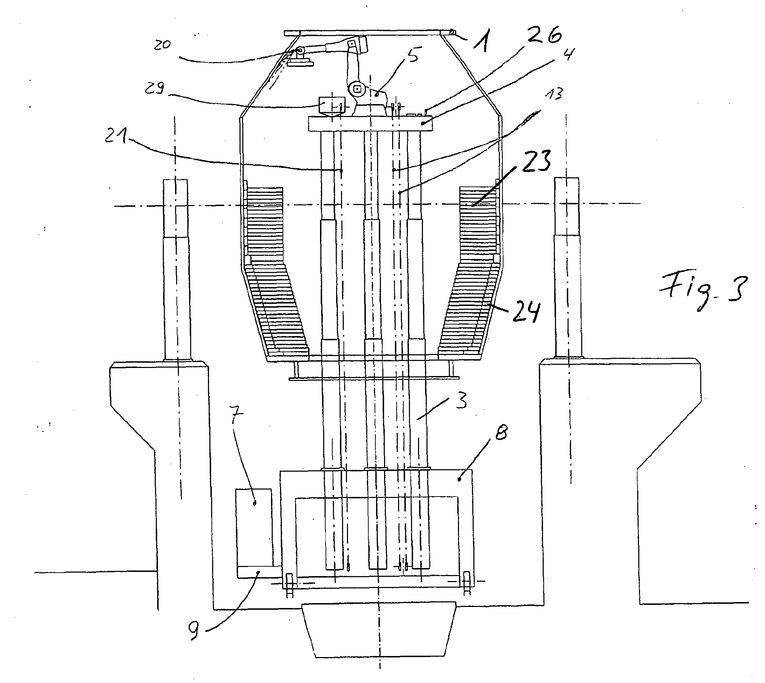

Zusätzlich ist dann auf der Arbeitsplattform 4 eine Mörtelmischvorrichtung 29 (Fig. 3) installiert, mit der aus der Verbindung von pulverisierter oder granulatförmiger Feuerfestmasse und Wasser eine Mörtelmasse erzeugt wird, die dann in die Freiräume gespritzt wird. Die Kamera 28 dient auch dazu, die Auffüllung des Freiraums zu überwachen. Eine heute dem Stand der Technik entsprechende Safe-Robot-Technologie ermöglicht es, zu jeder Zeit in das Programm einzugreifen und den Mauerungsroboter über ein mobiles Bedientableau zu steuern. Es ist auch denkbar, dass eine Bedienungsperson auf der Arbeitsplattform 4 die Arbeitsweise des Roboters 5 überwacht. Der gesamte Ausmauerungsvorgang kann alternativ oder zusätzlich auch durch eine über dem Konverter 1 installierte Kamera 27 überwacht werden.

### Bezugszeichenliste

- 1: Konverter
- 1 a: Wandung
- 1 b: Öffnung
- 2: Feuerfestmaterial
- 3: Hubvorrichtung
- 4: Arbeitsplattform
- 5: Mauerungsroboter
- 6: Messgerät
- 7: Robotersteuerung
- 8: Rahmengestell
- 9: Konsolen
- 10: zweiter Roboter, Zuführroboter
- 11: Steine, Paletten
- 12: Hydraulik
- 13: Kettenförderer
- 14: Lastaufnahmemittel
- 15: Antriebssystem
- 15a: fest installierte Kettenräder
- 16: Lasttrum
- 16a: Leertrum
- 17: Kettenräder
- 18: Gelenksystem
- 19: Werkzeuge
- 20: Laser-Messgerät
- 21: Lasthebeeinrichtung
- 22: Hohlraum
- 23: Verschleißfutter
- 24: Dauerfutter
- 25: Werkzeugwechselsystem
- 26: Spritzdüse
- 27: Kamera
- 29: Mörtelmischeinrichtung

## Patentansprüche

1. Roboterunterstützte Anlage zum Auskleiden einer Wand einer Umhüllung, insbesondere eines Konverters (1), mit einem, insbesondere feuerfesten, Mauerwerk, umfassend: wenigstens einen ersten, mit einer Steuerung ausgestatteten Roboter (5) zum Verlegen von Steinen (11), der auf einer wenigstens vertikal verschiebbaren Plattform (4) installiert ist, ein Depalettiermodul zum Auspacken und Vorbereiten von Steinen entsprechend den Erfordernissen des Roboters (5), einen Aufzug zum Befördern der von dem Depalletiermodul aufgenommenen Steine, eine Messvorrichtung zum Ausmessen des Konverters (1),
**dadurch gekennzeichnet,**
**dass** die Messvorrichtung ein Lasermessgerät (6, 20) umfasst,
**dass** der Aufzug wenigstens einen Kettenförderer (13) umfasst, der ein Antriebssystem (15) und wenigstens eine Förderkette aufweist,
**dass** der Kettenförderer (13) auf dem Wagenrahmen (8) als auch auf der Arbeitsplattform (4) fest integrierte Kettenräder (15a) aufweist, und
**dass** zwischen den Kettenrädern (15a) ein Leertrum (16a) in der Weise gebildet ist, dass Längendifferenzen zwischen verschiedenen Hubhöhen der Arbeitsplattform (4) durch eine scherenförmige Parallelogrammführung ausgleichbar sind.

2. Anlage nach Anspruch 1,
**dadurch gekennzeichnet,**
**dass** von der Messvorrichtung gemessene Konturen der inneren Auskleidung oder Wandung der Umhüllung einer Steuereinrichtung (7) des wenigstens einen ersten Roboters (5) zuführbar sind, die aus den gemessenen
Konturen Daten für die von dem Roboter (5) zu verlegenden Steine gewinnt.

3. Anlage nach einem der Ansprüche 1 bis 2,
**dadurch gekennzeichnet,**
**dass** die Anlage auf einem auf Schienen verfahrbaren Wagen mit einem Wagenrahmen (9) integriert ist.

4. Anlage nach einem der Ansprüche 1 bis 3,
**dadurch gekennzeichnet,**
**dass** der Aufzug ein verfahrbares Rahmengestell (8) mit hydraulisch betriebenen Teleskopzylindern (3) umfasst.

5. Anlage nach Anspruch 4,
**dadurch gekennzeichnet,**
**dass** an der Peripherie des Rahmengestells (8) Konsolen (9) angebracht sind, die der Aufnahme eines zweiten Roboters (10), einer Ladestation für
die zu verlegenden Steine (11), eines Hydraulikaggregats (12), einer Robotersteuerung (7) und/oder einer elektrischen Steuer- und/oder Antriebseinheit (7a) dienen.

6. Anlage nach Anspruch 5,
**dadurch gekennzeichnet,**
**dass** der zweite Roboter (10) zum Zuführen der insbesondere auf einer Palette geladenen Steine (11) dient.

7. Anlage nach einem der Ansprüche 1 bis 6,
**dadurch gekennzeichnet,**
**dass** das Antriebssystem (15) auf der Plattform (4) des wenigstens einen ersten Roboters (5) angebracht ist.

8. Anlage nach Anspruch 5,
**dadurch gekennzeichnet,**
**dass** der zweite Roboter (10) die in logistischer Reihenfolge auf die Palette geladenen Steine (11) aufnimmt und sie in den Kettenförderer (13) legt, der die Steine (11) auf die Arbeitsplattform (4) des wenigstens einen ersten Roboters (5) legt.

9. Anlage nach einem der Ansprüche 1 bis 8,
**dadurch gekennzeichnet,**
**dass** auf der Plattform (4) eine Mörtelmischeinrichtung (29) installiert ist, durch die vor Ort Mörtelmasse oder feuerfester Sand zum Verfüllen durch den wenigstens einen ersten Roboter (5) erzeugbar ist.

10. Anlage nach Anspruch 9,
**dadurch gekennzeichnet,**
**dass** auf der Plattform (4) ein Wassertank integriert ist.

11. Anlage nach einem der Ansprüche 1 bis 10,
**dadurch gekennzeichnet,**
**dass** wenigstens eine Überwachungskamera (27), insbesondere eine 3D-Kamera, zur Überwachung des Ausmauerns der Umhüllung, insbesondere des Füllens von Freiräumen zwischen Steinen der Ausmauerung, vorgesehen ist.

## Claims

1. Robot-assisted plant for cladding a wall of a casing, particularly of a converter (1), with a, in particular, refractory lining, comprising: at least one first robot (5), which is equipped with a control, for laying blocks (11), which robot is installed on at least one vertically displaceable platform (4), a depalleting module for unpacking and providing blocks in correspondence with the requirements of the robot (5), a lift for conveying blocks received from the depalleting module and a measuring device for measuring the converter (1),
**characterised in that**
the measuring device comprises laser measuring apparatus (6, 20),
the lift comprises at least one chain conveyor (13), which comprises a drive system (15) and at least one conveyor chain,
the chain conveyor (13) comprises chainwheels (15a) fixedly integrated on the carriage frame (8) and also on the work platform (4) and
an idle run (16a) is so formed between the chainwheels (15a) that compensation for differences in length between different lift heights of the work platform (4) can be provided by a scissors-like parallelogram guide.

2. Plant according to claim 1, **characterised in that** contours, which are measured by the measuring device, of the inner cladding or walling of the casing can be supplied to a control device (7) of the at least one first robot (5), which obtains data for the blocks to be laid by the robot (5) from the measured contours.

3. Plant according to one of claims 1 and 2, **characterised in that** the plant is integrated on a carriage, which is movable on rails, with a carriage frame (9).

4. Plant according to any one of claims 1 to 3, **characterised in that** the lift comprises a movable frame structure (8) with hydraulically operated telescopic cylinders (3).

5. Plant according to claim 4, **characterised in that** brackets (9) serving for mounting a second robot (10), a loading station for the blocks (11) to be laid, a hydraulic unit (12), a robot control (7) and/or an electrical controlling and/or driving unit (7a) are mounted at the periphery of the frame structure (8).

6. Plant according to claim 5, **characterised in that** the second robot (10) serves for feeding the blocks (11) which, in particular, are to be loaded onto a pallet.

7. Plant according to any one of claims 1 to 6, **characterised in that** the drive system (15) is mounted on the platform (4) of the at least one first robot (5).

8. Plant according to claim 5, **characterised in that** the second robot (10) receives the blocks (11) loaded in logical sequence on the pallet and places them in the chain conveyor (13), which lays the blocks (11) on the work platform (4) of the at least one first robot (5).

9. Plant according to any one of claims 1 to 8, **characterised in that** a mortar mixing device (29), by which mortar masses or refractory sand for pointing by the at least one first robot (5) can be produced, is installed on the platform (4).

10. Plant according to claim 9, **characterised in that** a water tank is integrated on the platform (4).

11. Plant according to any one of claims 1 to 10, **characterised in that** at least one monitoring camera (27), particularly a 3D camera, for monitoring lining of the casing, particularly the pointing of free spaces between blocks of the lining, is provided.

## Revendications

1. Installation assistée par robot pour le revêtement d'une paroi d'une enveloppe, en particulier d'un convertisseur (1) comprenant une maçonnerie en particulier de type coupe-feu, comprenant : au moins un premier robot (5) équipé d'une commande pour le déplacement de pierres (11), qui est monté sur une plate-forme (4) apte à se déplacer au moins en direction verticale ; un module de dépalettisage pour le déballage et la préparation des pierres conformément aux exigences du robot (5) ; un élévateur pour acheminer les pierres prélevées par le module de dépalettisage ; un dispositif de mesure pour le cubage du convertisseur (1), **caractérisée en ce que** le dispositif de mesure comprend un appareil de mesure par laser (6, 20) ; **en ce que** l'élévateur comprend au moins un transporteur à chaîne (13) qui présente un système d'entraînement (15) et au moins une chaîne transporteuse; **en ce que** le transporteur à chaîne (13) présente des roues d'entraînement (15a) montées à demeure aussi bien sur l'encadrement du chariot (8) que sur la plate-forme de travail (4) ; et **en ce qu'**un brin de retour (16a) est formé entre les roues d'entraînement (15a) de telle sorte que l'on peut compenser des différences de longueur entre différentes hauteurs de lavage de la plate-forme de travail (4) via un guidage en parallélogramme en forme de ciseaux.

2. Installation selon la revendication 1, **caractérisée en ce que** les contours du revêtement interne ou de la paroi de l'enveloppe, mesurés par le dispositif de mesure, peuvent être acheminés à un mécanisme de commande (7) dudit au moins un premier robot (5), qui, à partir des contours mesurés, dégage des données pour les pierres qui doivent être déplacées par le robot (5).

3. Installation selon l'une quelconque des revendications 1 à 2, **caractérisée en ce que** l'installation est montée à demeure sur un chariot comprenant un encadrement de chariot (9), apte à se déplacer sur des rails.

4. Installation selon l'une quelconque des revendications 1 à 3, **caractérisée en ce que** l'élévateur comprend un bâti d'encadrement mobile (8) comprenant des cylindres télescopiques (3) entraînés par voie hydraulique.

5. Installation selon la revendication 4, **caractérisée en ce que** des consoles (9) sont disposées à la périphérie du bâti d'encadrement (8), qui servent à la réception d'un deuxième robot (10), d'un poste de chargement pour les pierres (11) qui doivent être déplacées, d'un agrégat hydraulique (12), d'une commande de robot (7) et/ou d'une unité de commande et/ou d'entraînement électrique (7a).

6. Installation selon la revendication 5, **caractérisée en ce que** le deuxième robot (10) sert à acheminer les pierres (11) en particulier chargées sur une palette.

7. Installation selon l'une quelconque des revendications 1 à 6, **caractérisée en ce que** le système d'entraînement (15) est monté sur la plate-forme (4) dudit au moins un premier robot (5).

8. Installation selon la revendication 5, **caractérisée en ce que** le deuxième robot (10) prélève les pierres (11) chargées sur la palette dans un ordre logistique et les dépose dans le transporteur à chaîne (13) qui dépose les pierres (11) sur la plate-forme de travail (4) dudit au moins un premier robot (5).

9. Installation selon l'une quelconque des revendications 1 à 8, **caractérisée en ce qu'**un dispositif de mélange de mortier (29) est monté sur la plate-forme (4), par lequel on peut obtenir sur place une matière sous forme de mortier ou du sable ininflammable à des fins de remplissage via ledit au moins un premier robot (5).

10. Installation selon la revendication 9, **caractérisée en ce qu'**un réservoir d'eau est monté à demeure sur la plate-forme (4).

11. Installation selon l'une quelconque des revendications 1 à 10, **caractérisée en ce qu'**on prévoit au moins une caméra de surveillance (27), en particulier de caméra en trois dimensions pour la surveillance de la maçonnerie de l'enveloppe, en particulier du remplissage des espaces libres entre les pierres de la maçonnerie.
